(19) **Europäisches Patentamt / European Patent Office / Office européen des brevets**

(11) **EP 4 614 247 A1**

(12) **EUROPEAN PATENT APPLICATION**

(43) Date of publication:
**10.09.2025 Bulletin 2025/37**

(51) International Patent Classification (IPC):
**G05B 19/404** (2006.01)

(21) Application number: 24161928.7

(22) Date of filing: **07.03.2024**

(52) Cooperative Patent Classification (CPC):
**G05B 19/404;** G05B 2219/37207;
G05B 2219/45221

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **GF Machining Solutions SA
1217 Meyrin 1 (CH)**

(72) Inventors:
• **Chapatte, Christian
1213 Petit Lancy (CH)**
• **Pereira, Luis
1273 Arzier (CH)**
• **Perez, Roberto
1208 Genève (CH)**

(74) Representative: **Arend, Christa
United Machining Solutions Management AG
Wankdorfallee 5
3014 Bern (CH)**

(54) **METHOD FOR CALIBRATING A DIE-SINKING ELECTRO DISCHARGE MACHINING MACHINE TOOL**

(57) The present invention is related to a method for compensating positioning errors of a diesinking electro-discharge machine tool, wherein the machine tool comprises a worktable and a machine head with a rotational axis device, wherein a machine chuck is detachably mounted at the rotational axis device, wherein a tool electrode can be mounted on the machine chuck and a workpiece can be mounted on the machine table, wherein the machine tool comprises three linear axes (X, Y and Z) and a rotation axis (C), by which the tool electrode and the workpiece can be moved relative to each other, wherein the machine tool comprises a control unit configured to control the position of the linear axes.

The method comprises the following steps:
a. mounting a first touch probe (45) on the worktable;
b. mounting a reference device (60) on the machine chuck, wherein the reference device has a clamping portion (61) for clamping the reference device into the machine chuck and a measurement portion (62), wherein the measurement portion has a plate-like shape with a top surface and a bottom surface, wherein the clamping portion is formed on the top surface and a reference hole (65) is formed on the bottom surface, wherein the reference hole is arranged in a manner that the central axis of the reference hole is aligned with the central axis of the machine chuck when the reference device is clamped in the machine chuck;
c. contacting the inner surface of the reference hole at a plurality of positions by the first touch probe, in particular at least four positions in the reference hole;
d. determining the center position of the reference hole based on the measured positions;
e. calculating a concentricity deviation (CD_X, CD_Y) by comparing the determined center position of the reference hole with the position of the rotational axis (C-axis), wherein the concentricity deviation defines the radial distance between the rotational axis of the machine head (9) and the central axis of the machine chuck (21);
f. measuring a tool electrode offset by a coordinate measurement device;
g. calculating a tool-electrode correction amount for a target position of the machine axes (X, Y, Z, C) on the basis of the calculated concentricity deviation and the tool-electrode offset;
h. adapting the target position of the machine axes to a real position by adding the calculated tool-electrode correction amount; and
i. applying the real position for controlling the machine axes by the control unit of the machine tool.

**Fig. 3**

**Description**

**FIELD OF THE INVENTION**

The present invention is related to a method for calibrating a die-sinking EDM (Electrical Discharge Machining) machine tool.

**BACKGROUND OF INVENTION**

Die-sinking EDM machining is a well-known non-traditional machining process by removing materials from the workpiece based on the electrical discharge between the workpiece and the tool electrode, which are normally immersed in the dielectric fluid. This machining process is in particular advantageous for manufacturing part having complex geometry and made of hard material. EDM machining process can also achieve high accuracies and fine surface finish. The tool electrode is mounted in a tool holder and said tool holder is releasable mounted on a chuck which is mounted on the machine head facing the workpiece. Due to electrical discharges occurring between the tool electrode and the workpiece, the material of the workpiece can be removed. Thus, the tool electrode can produce a cavity having the opposite shape of the tool electrode or other required shape on the workpiece.

Normally, a die-sinking EDM machine tool has three linear axes, X, Y and Z and one rotation axis C. Conventional coordinate system and axis nomenclature is illustrated in ISO 841. For instance, a X slide and a Y slide with respective drive units are mounted in series on a machine bed and bear the worktable mounting the workpiece thereon. The machine bed further bears a column with the machine head mounted thereon. The machine head moves along the Z-axis and has a C-axis device arranged in the machine head or mounted at the bottom thereof. Lastly, a chuck is mounted on said C-axis device, so that a tool holder holding a tool electrode can be releasably clamped in the chuck. Sometimes, no C-axis device is present, in which case the chuck is mounted directly on said machine head. The EDM machine tool generally comprises a control unit, in particular, a CNC (Computer Numeric Control) unit to control the machining process, but also for the control of setup operations, intermediate operations, postprocessing. Additionally, the machining path is stored in the CNC unit, which controls drive units of the axes of the machine tool to achieve the relative motion between the workpiece and the tool electrode. The geometry of the cavity produced in the workpiece is dependent on relative position of the workpiece and the tool electrode during the EDM process and the geometry of the tool electrode. If the tool electrode is not positioned precisely to the desired position, this positioning error can directly be reflected on the produced final part, in particular the geometrical inaccuracy can appear in the final part, as a positional error or dimensional error of the cavity.

The resolution of modern CNC machine tool has been improved dramatically, in particular by the widely used linear glass scales. For example, linear axes have a positioning resolution down to $0.1\,\mu m$. However, at the same time, the accuracy requirements of the produced part have been increased. In many applications, the accuracy of the produced part must reach $\mu m$ range or less, thus, it is important to consider all sources causing inaccuracy of the produced part and to avoid these or determine and compensate the inaccuracy caused.

Knowingly, the machining accuracy depends on several factors, including the machining process itself, the mechanical accuracy, the stiffness and thermal behavior of the entire structural loop, the environmental conditions, etc., which are not the object of the present invention. Beside these factors, for the tool electrode one deviation exists in between the theoretical shape designed in CAD/CAM and the real shape of the electrode after the manufacturing of the electrode. This deviation produces a positional or dimensional error at the workpiece during machining. Thus, it is important to take measures to avoid such errors.

US 5248867 discloses an alignment device for measuring the misalignment of an electrode. The electrode is mounted on the main shaft and an electrode position is detected by an electrode position detector and the misalignment information is determined and stored. When the electrode is mounted in the EDM machine, the coordinates of the electrode are first obtained and set these coordinates as a temporary origin. The misalignment information can be retrieved and correction distances from the temporary origin are calculated based on the misalignment information.

Usually, the misalignment of an electrode is called "electrode offset". This "electrode offset" is determined based on the electrode reference point, for example the zero point of the tool electrode. The offset defines the distance between the coordinates X, Y, Z of the electrode reference point and the coordinates X, Y, Z of the zero point of the measurement device, for example the zero point of measurement chuck. On the electrode reference point, the orientation around the Z direction is given between the reference face on the electrode compared with the direction X of the measurement device. The location and orientation of the theoretical electrode reference point is defined during the phase design. In the CAD system, one point and one face are selected on the electrode CAD model. Then, the exact location and orientation corresponding to the electrode reference point on the real physical electrode is measured. The values reflect the "electrode offset", in X, Y, Z, and C direction. In order to ensure that the tool electrode is positioned correctly in the cavity, tool electrode offset must be known and compensated by the CNC during execution.

However, beside the misalignment of the electrode, positioning errors of other machine elements can also cause the inaccurate positioning information, such as the error of a rotation axis of the machine tool which includes the radial error, tilt error and axial error. In order to mount and replace the tool electrode into the machine, die-sinking EDM machines are equipped with a pneumatic chuck installed on the C-axis device of the machine head for mounting the tool electrode holder therein, precisely. In the ideal situation, the central axis of the chuck and the rotation C-axis of the EDM machine are coincident, such that the chuck and the C-axis have a perfect concentricity. However, it is impossible to achieve such ideal concentricity due to the production tolerance of the components and assembly errors, therefore a concentricity deviation between the central axis of the chuck and the rotation C-axis of the machine tool always exists. This means that the central axis of the chuck is deviated from the C-axis of the EDM machine. If the C-axis is used for the orientation of the electrode or for the machining process itself, then the concentricity deviation certainly causes directly the positioning error of the electrode and inaccuracy of the produced final part by the electrode.

Until now, a mechanical adjustment of both, the C-axis and the central axis of the tool holder clamping chuck must be conducted before starting the machining to reduce the concentricity deviation. However, this manual correction is a complex procedure which must be carried out by a specialist. When the concentricity deviation is not considered, it will not be eliminated when calculating the correction distance as in US 5248867. Consequently, the concentricity deviation will be transferred as a positioning error of the tool electrode during the machining and will directly have a negative impact on the final part accuracy.

## SUMMARY OF THE INVENTION

It is an objective of this invention to provide a method for compensating positioning errors of a die-sinking EDM machine tool to improve the accuracy of the machined part. It is a further objective to provide a method for compensating the positioning errors of the machine tool to reduce the positional and/or dimensional error of a cavity machined on a workpiece.

The objective of the present invention is achieved by a method for compensating positioning errors of a die-sinking electro-discharge machine tool.

The machine tool comprises a worktable and a machine head with a rotation-axis device. A machine chuck is detachably mounted at the rotation-axis device. A tool electrode can be mounted on the machine chuck and a workpiece can be mounted on the machine table. The machine tool comprises three linear axes (X, Y and Z) and a rotation axis (C), by which the tool electrode and the workpiece can be moved relative to each other. The machine tool comprises a control unit configured to control the position of the linear axes to a defined position. The die-sinking machine tool comprises a physical Z axis, perpendicular to XY axis, and the machine head mounted on the Z axis. A movement along Z axis makes the complete head moving along Z axis. A rotational axis device (C axis) is incorporated into the machine head, and finally a machine chuck is mounted on the rotation axis. The chuck is the mechanical device to clamp an electrode holder bearing the tool electrode therein. The center of this chuck is called central axis, this central axis is supposed to be parallel to Z axis movement and coincident with rotational axis C axis.

The relative position of the workpiece and the tool electrode is essential to generate the designed cavity on the workpiece. For instance, the positioning of the workpiece or the electrode in the X/Y plane is achieved by the movement of the X and Y axes. And additional movement on the electrode, the Z and C-axes insure the vertical and rotational positioning.

The method incorporates two main steps. The first step is dedicated to determine the deviation of the chuck position compared to the ideal position. To determine the deviation, the method defines the measurement process using standard metrology equipment, typically a touch probe mounted on the machine EDM table and a reference device clamped on the machine chuck. Preferably, the reference device is a so-called Master Pallet which is highly precisely manufactured. A particular measurement procedure is applied on the machine to collect data reflecting the deviation. Then the data collected are input into a processing unit to compute the values corresponding to the deviation, this deviation is called a concentricity deviation.

The second step is the treatment or compensation of the deviations detected. The compensation is done by a correct adjustment of the electrode offset in order to reach any machining position. To achieve the second step, the method comprises the steps of measuring a tool electrode offset by a coordinate measurement device; adapting the concentricity deviation to an adapted concentricity deviation according the measured tool electrode offset; computing an adapted tool electrode offset by the cumulation of measured electrode offset and the adapted concentricity deviation; calculating a position correction amount for a target position of the machine axes (X, Y, Z, C) on the basis of the determined adapted tool-electrode offset by the control unit of the machine tool; adapting the target position of the machine axes to a real position by adding the calculated position correction amount by the control unit of the machine tool; and applying the real position for controlling the machine axes.

In particular, the target position is a defined position during the machining preparation phase. The position correction amount is computed for each particular electrode, for a target position of the machine axes (X, Y, Z, C), the position correction amount is applied to reach properly the position during execution.

Preferably, the calculation of position correction amount and the real position are conducted by the control unit in the machine tool, for example a CNC. In particular, this calculation is performed in real time.

In one variant, it is possible to conduct this computation externally, and the result is transferred to the CNC before the machining execution. the values measured with the reference equipment are communicated to the control unit of the EDM. The control unit transfers the values measured to one particular processing unit and all deviations are calculated and delivered by this processing unit. Then the values corresponding to the deviations are stored into the control unit of the machine tool, or into one external data base, ready to be use for the combination with electrode offset.

In another variant, the values measured with the reference equipment are communicated directly to an external device. The external device transfers the result of measurement to the processing unit for deviations computation. Similarly, to the first variant, the values corresponding to the deviation computation are stored on the proper place, for final combination before execution. For example, the deviations are stored into a global database describing all the equipment installed into a particular workshop at the customer's premises.

In any case, the result of the deviations computation delivers radial movement in X and Y direction. This radial movement affects the position X and Y of the electrode during the execution of EDM process. The deviation computation delivers the information corresponding to the machine deviation observed. This machine deviation is ignored by the tool electrode offset measurement. For this reason, the calculated deviations are combined with the tool electrode offset for the calculation of the position correction amount to obtain more accurate compensation.

This method is also well in line with modern automation and multi-process applied during the global manufacturing process of the part. The electrodes are often machined by milling and measured by an external device, like a Coordinate Measurement Machine (CMM). When the tool electrode offset is measured on CMM, the offsets are calculated regarding the center of a measurement chuck in CMM instead of the machine chuck in which the electrode is mounted later for machining. Even if the tool electrode offset of the real electrode dimensions are compensated by adequate positioning offsets, the machine deviations remain and will stay as residual error limiting the final accuracy of the process, because the machine deviation will directly impact on the produced part. The method of the present invention can overcome this drawback, because both the machine deviation and the tool electrode offset are measured and combined and compensated.

The machine deviation and the tool electrode offset are combined to get the compensation to apply. The method is interesting as the electrode offset are ready to be used on all the machines existing in the workshop, when one machine is selected the process unit is able to combine the electrode offset with the specific deviation of the machine selected.

The method is also interesting as the tool electrode offset measurement can be conducted in the machine tool or externally. And this new method offers more advantages. It is considerable to conduct the tool electrode offset measurements before the machining and to store the data in the controller of the machine tool or in a database, thus, the preparation time can be shorted by saving the tool electrode offset measurement time. In most of applications, several electrodes must be used to generate a cavity with complex shape. For such applications, all tool electrodes used for the machining can be measured in advance before machining. After changing the electrode, the control unit needs only to access to the measured tool electrode offset corresponding to the new electrode. The real target position is then calculated during execution based on this correction to apply.

The method comprises the steps of mounting a first touch probe on the worktable and mounting a reference device on the machine chuck. The reference device has a clamping portion for clamping the reference device into the chuck and a measurement portion, which has a plate-like shape with a top surface and a bottom surface. The clamping portion is formed on the top surface and a reference hole is formed on the bottom surface. The reference hole is arranged in a manner that the central axis of the reference hole is aligned with the central axis of the machine chuck when the reference device is clamped in the machine chuck. Preferably, the reference device is a so-called Master Pallet which is highly precisely manufactured.

One deviation is caused by the concentricity deviation between the rotational axis (C-axis) and the central axis of the machine chuck. The method further comprises the steps of: contacting the inner surface of the reference hole at a plurality of positions by the first touch probe, in particular at least four positions in the reference hole; determining the center position of the reference hole based on the measured positions and calculating the concentricity deviation (CD_X, CD_Y) by comparing the determined center position of the reference hole with the position of the rotational axis (C-axis) by a processing unit. The concentricity deviation defines the radial distance between the central axis of the machine chuck and the rotational axis (C-axis) incorporated on the machine head. If the center axis of the machine chuck and the rotation axis of the C-axis device are perfectly coincident, the concentricity deviation is zero. But in the reality, the concentricity deviation always exists.

Preferably, the reference hole position measurement includes the steps of rotating the C-axis at several positions, at least two positions with a delta of 180 degrees, and for each C-axis position contacting the inner surface of the reference hole at a plurality of positions by the first touch probe, in particular at least four positions in the reference hole, and determining the center position of the reference hole based on the measured positions.

Another error source is the tool electrode because of the so-called tool electrode offset. To obtain this value, the tool electrode is measured by the coordinate measurement device at outside of the machine. Basically, this error reflects the difference between the electrode defined by the design phase and the real electrode shape achieved by the electrode manufacturing.

On the machine side, in addition to the concentricity deviation, additional deviations affecting the chuck location are possible. In particular, the planarity deviation of the machine chuck can exist. Particularly, the parallelism deviation of the rotational axis can occur. Those types of additional deviations are measured on the machine by using again the reference device, the first touch probe, and a second touch probe. A particular measurement procedure is applied on the machine to collect data reflecting the different types of deviation. Then the data collected are input into a processing unit which is configured to compute the values corresponding to each type of deviation.

The planarity deviation defines the error of the perpendicularity of the chuck reference plan compared to vertical axis (Z axis). The chuck reference plan is the plan perpendicular to central axis of the machine chuck.

In a preferred variant, the method comprises the steps of: contacting a plurality of positions on the bottom surface of the reference device by the first touch probe, in particular four positions at four different corners of the bottom surface; determining the plurality of positions on the bottom surface; and determining the planarity deviation (PLD_X, PLD_Y) based on the measured positions on the bottom surface of the reference device, wherein the planarity deviation defines horizontal inclination of the machine chuck.

The parallelism deviation defines the angle between the rotational axis (C-axis) and the vertical axis (Z axis). In an advantageous variant, the method comprises the steps of: replacing the reference device by a second touch probe having a reference ball on the top of the second touch probe, contacting the reference ball of the second touch probe by the first touch probe, determining the position of the reference ball by the processing unit based on the measured positions on the reference ball; comparing the position of the reference ball with the position of the reference hole of the reference device; and determining a parallelism deviation (PAD_X, PAD_Y) based on the comparison of the position of the reference ball with the position of the reference hole of the reference device. The parallelism deviation defines the vertical inclination of the C axis. The position of the reference ball bottom is determined based on the measured plurality of positions on reference ball by the processing unit. The position of the reference hole of the reference device is determined based on the measured plurality of positions on the bottom surface and on the inner surface of the reference hole by the processing unit.

In a preferred variant, the planarity deviation and the parallelism deviation are also considered to determine the position correction amount. This can further improve the accuracy of produced part, because all positioning errors can be compensated by the position correction amount. For this variant, the planarity deviation and parallelism deviation are converted to one corresponding converted concentricity deviation. This converted concentricity deviation is cumulated to the measured concentricity deviation to get the global concentricity deviation (GCD_X, GCD_Y). In this variant, the principle of the method described is not affected but the final result is more accurate as the concentricity deviation incorporates the corresponding portion of the planarity deviation and the parallelism deviation.

In one variant, the method comprises selecting one or more of the following positioning errors to be compensated: the planarity deviation and the parallelism deviation. The algorithm computing the position correction amount is configurable by the user. The user configuration defines if all types of deviations need to be incorporated for the correction, or if one portion of the deviations observed will be incorporated. The concentricity deviation is systematically incorporated, and the planarity deviation and the parallelism deviation are optionally incorporated for the final correction computation. This provides more flexibility. Depending on the application and the accuracy requirements, the user can flexibly decide which deviation should be considered.

**BRIEF DESCRIPTION OF THE DRAWINGS**

In order to describe the manner in which advantages and features of the disclosure can be obtained, in the following a more particular description of the principles briefly described above will be rendered by reference to specific embodiments thereof which are illustrated in the appended drawings. These drawings depict only exemplary embodiments of the disclosure and are not therefore to be considered to be limiting of its scope. The principles of the disclosure are described and explained with additional specificity and detail through the use of the accompanying drawings in which:

Fig. 1, Fig.2: illustrate schematic views of a die-sinking EDM machine;

Fig. 3: illustrates a front view of a machine head with a rotational axis device;

Fig. 4: illustrates a bottom view of the machine head with a rotational axis device;

Fig.5: illustrates a concentricity deviation.

Fig. 6: illustrates a planarity deviation;

Fig. 7: illustrates a parallelism deviation;

Fig. 8: illustrates schematic view of the first instrument applied for the measurement - a reference device and a first touch probe;

Fig 9: illustrates a side view of the reference device;

Fig. 10: illustrates a bottom view of the reference device;

Fig. 11, 12: illustrate different clamping position of the reference device on the machine chuck;

Fig. 13: illustrates schematic view of a second instrument applied for the measurement - first touch probe & second touch probe;

Fig. 14, 15 and 16: illustrate the machine head with the first touch probe, the reference device and the tool electrode therein, respectively;

Fig. 17, 18: illustrate a numerical example of machine deviation measurement and computation method step;

Fig. 19,20: illustrates schematic views of tool electrode offset measurement on CMM;

Fig. 21,22: illustrate schematic views of tool electrode offset with the value of zero;

Fig. 23,24: illustrates schematic views of tool electrode offset measured after manufacturing;

Fig. 25,26: illustrate a numerical example of the present invention method of calculating the position correction amount; and

Fig, 27,28: illustrates flow chart of the method.

## EXEMPLARY EMBODIMENTS

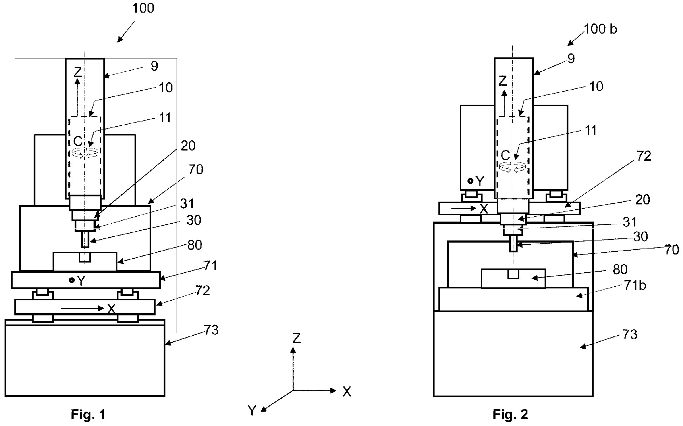

Figure 1 illustrates schematically a die-sinking EDM machine tool 100. The die-sinking machine tool has normally three linear axes, X, Y and Z and one rotational axis, C-axis rotating around the Z-direction. The machine tool comprises a machine base 73 having a cross slider 72 and a machine table 71 thereon. A machine work tank 70 is mounted on the machine table for receiving dielectric liquid required for the EDM machining. A workpiece 80 can be mounted on the machine table. The cross slider is mounted on a pair of sliding rails and can be driven to move in the X direction. On the top surface of the cross slider another pair of sliding rails is mounted to arrange the machine table thereon and the machine table is driven to move along the sliding rails in the Y direction.

For clamping a tool electrode 30, an electrode holder 31 holding the tool electrode is clamped on a machine chuck 20. The machine chuck is mounted on a rotational axis device, namely a C-axis device 10, and the C-axis device is incorporated into the machine head 9. The machine head moves along the Z-axis, and the C-axis 11 rotates around the Z-axis.

A tool electrode is typically not directly mounted in the machine chuck but through the tool electrode holder 31. During the setup period, the tool electrode is mounted in the tool electrode holder outside the machine tool, such that the tool electrode holder having the tool electrode therein can be clamped into the machine chuck in one step. For example, a zero-point clamping system is applied. The tool electrode is mounted on one side of the tool electrode holder and a drawbar is mounted on the opposite of the tool electrode holder. When mounting the tool electrode holder into the machine chuck, the drawbar is inserted in a bore provide in the chuck and clamped therein. The chuck and the electrode holder are provided with reference elements to ensure the precise positioning.

Figure 2 illustrates schematically another variant of the die-sinking EDM machine tool 100b.

Compared to the type of machine illustrated by the fig 1, the machine illustrated by the fig 2 is designed in a manner that the movement in X and Y direction is applied directly on the machine head. The machine table 71b is static on the machine base 73. The method of the present invention can be applied for both types of EDM machine tool shown in figures 1 and 2. However, the method is explained based on the machine type shown in the figure 2.

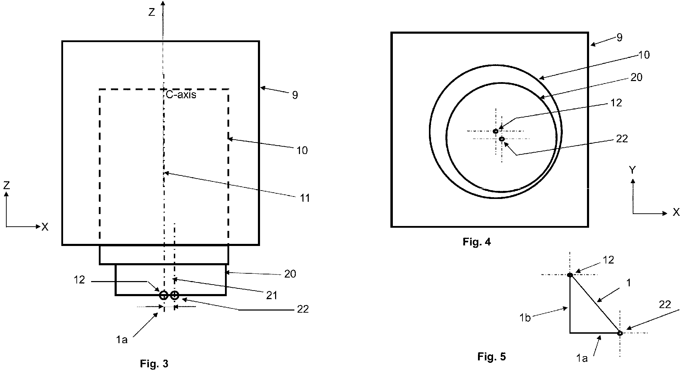

Figures 3 and 4 depict a simplified front view and bottom view of the machine head 9 having the machine chuck 20 assembled therein. The center axis of the machine chuck is called as a central axis 21 and runs in parallel to the C-axis 11. Ideally, the C-axis and the central axis of the machine chuck are aligned and concentric. However, it is impossible to achieve the exact concentricity of these two axes due to the production tolerances of the C-axis device and due to the residual error in the assembly of the chuck on the C-axis. The radial distance existing between the C-axis 11 and the central axis 21 is defined as the concentricity deviation. The central axis of the machine chuck 21 and the center rotation axis of C-axis device 11 are illustrated by two dotted lines in figure 3 and two points in figures 4 and 5.

The concentricity deviation is illustrated in the figure 5. The concentricity deviation 1 is defined by the accumulation of the concentricity deviation in X direction 1a and Y direction 1b. Additionally, after the final assembly and control of the machine, accidents can occur during the machining and thereby affects the positions of the C-axis and/or the position of the chuck. This may increase the concentricity deviation. The concentricity deviation has a direct impact on the produced part accuracy, especially on the positioning accuracy of the machined EDM cavities.

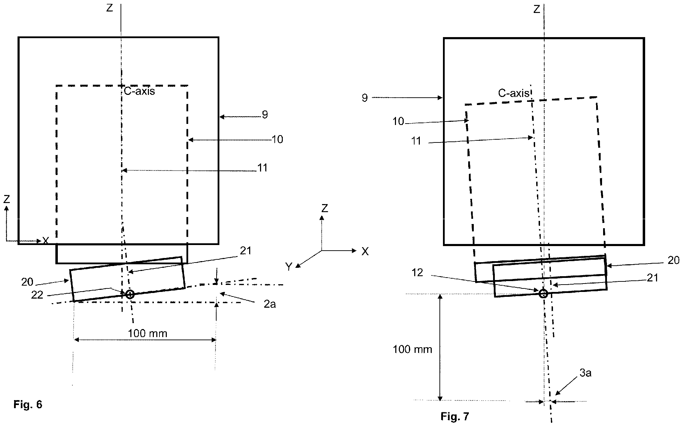

In addition, due to the assembly tolerance of the machine itself, additional possible deviations exist. One of these deviations is so-called a planarity deviation. The planarity deviation is illustrated in the figure 6. This deviation shows the position of the chuck with a central axis 21 not parallel to the C-axis 11. This deviation is defined relative to the position of the plan X-Y perpendicular to the central axis. Compared to the ideal position of the chuck, namely without planarity deviation, the chuck having the planarity deviation is rotated around X and/or Y. The inclination around Y creates the planarity deviation PLD_X 2a and the inclination around X creates the planarity deviation PLD_Y. The planarity deviation is finally the accumulation of both planarity deviations. The value defined by the planarity deviation is in reference to a certain distance along X or Y. For example, the planarity deviation PLD_X= +10 $\mu$m for 100 mm distance along X. Consequence, if electrode length is 100 mm, this impacts the bottom position of the electrode by a radial movement in X of +10microns.

Another possible deviation is a so-called a parallelism deviation. The parallelism deviation is illustrated in the figure 7. This deviation corresponds to a non-parallelism between the Z-axis and the C-axis. Typically, during the assembly, the C-axis device is incorporated in the machine head. And the machine head moves along the linear axis Z. Due to assembly tolerance, the Z-axis movement and the C-axis rotation are never absolutely in parallel, therefore this creates the parallelism deviation. The figure 7 shows the situation with the parallelism in X direction. For simplification, the central axis of the machine chuck is illustrated to be in parallel to the C-axis. However, the C-axis is not in parallel to Z-direction but has an inclination to the Z-axis. Compared to the ideal position without parallelism deviation, C-axis device 10 is rotated around X and/or Y. The figure 7 illustrates the rotation around Y. The inclination around Y creates the parallelism deviation PAE_X 3a and the inclination around X creates the parallelism deviation PAE_Y. The parallelism deviation is finally the accumulation of both parallelism deviations PAE_X and PAE_Y. The value defined by the parallelism deviation is in reference to a certain distance along Z. For example, the parallelism deviation in X= +10 microns for 100 mm distance along Z. Consequently, if the Z axis is moving by a distance of +100 mm, this impacts the position of the C-axis by a radial movement of +10microns.

Thus, the aim of the present invention is to measure at least one of the different deviations and to compensate at least one of these deviations during the machining in real-time. It is mandatory to measure the concentricity deviation and it is optional to measure additional deviations, the planarity and the parallelism deviations. The compensation is achieved according the deviation measured, only the concentricity deviation or the concentricity combined with the planarity deviation and the parallelism deviation.

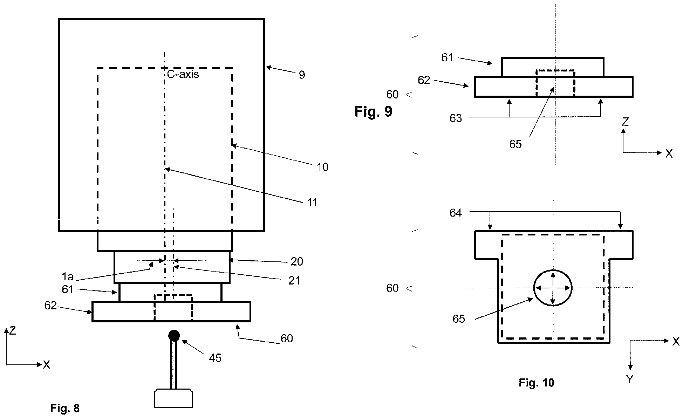

Figures 8 illustrates schematic view of a first measurement setup for determining the concentricity deviation and the planarity deviation. This setup can also be applied for only measuring the concentricity deviation.

A reference device 60 for example a so-called Master Pallet is installed in the machine chuck 20, which has a clamping portion 61 and a measurement portion 62. The figure 9 illustrates a side view of the reference device and the figure 10 shows a bottom view of the reference device. The reference device has a plate-like shape with a top surface and a bottom surface. Additionally, a reference hole 65 is provided on the bottom surface. A first touch probe 45 is mounted on the machine table which is not shown in this figure. This instrument detects points on the reference device by an electrical detection method. A voltage is applied between the reference device and the first touch probe, then the touch probe is moved in the direction of the reference device according to a certain direction of movement. The system detects the position when the voltage is shut down by a short circuit. The direction of movement is defined by the type of detection expected.

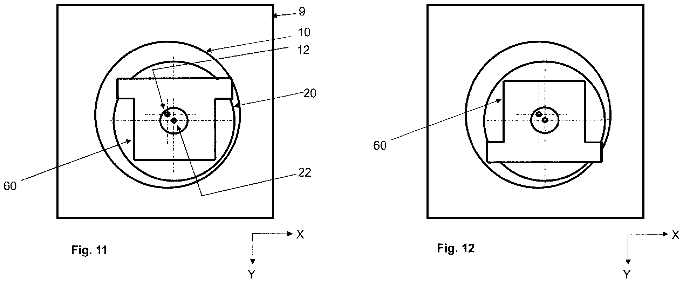

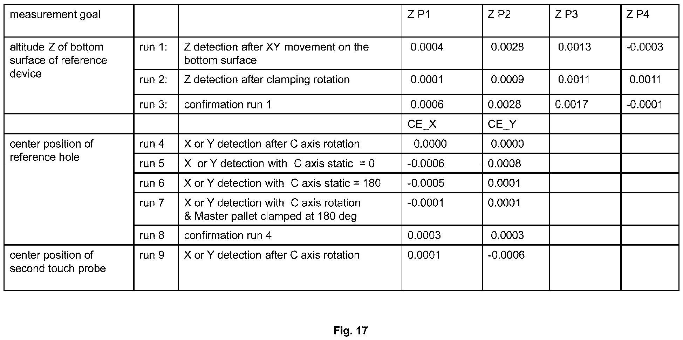

To measure the concentricity deviation, the center of the reference hole 65 of the reference device is detected. Additionally, the coordinate of the center of the reference hole is determined and stored. The center is detected several times by using different measurement settings. Figure 17 shows the measurement results of 5 runs of measurement with 5 different measurement settings indicated by run 4, run 5, run 6, run 7 and run 8. For each run, at least four points in the reference hole are detected, in particular four points on the side surface of the reference hole. The measurement settings define the position of the C-axis and the mounting position of the reference device. During the run 4, points in the center are detected with C axis movement between detections. During the run 5, points in the center are detected without C-axis movement, namely the C axis is static at the initial position, namely C is at 0 degree between the detections. During the run 5, points in the center are detected without C-axis movement, but C axis is static at position C=180 degree between detections. During the run 7, the movement of the C-axis is the same as the run 4, but the reference device is no more clamped at the first clamping position as shown in the figure 11 but rotated by 180 degree to a second clamping position as shown in the figure 12. The points collected during runs 4,5,6 and 7 allow to eliminate the deviation of the reference device itself to finally establish the concentricity deviation of the chuck. The concentricity deviation CD_X and CD_Y in X and Y direction corresponds to the radial shift of the central axis of the machine chuck from the C axis. In addition, the run 8 is executed to ensure the robustness of the measurement by comparing the measurement data of run 4 and run 8.

Like measurement of the concentricity deviation, the planarity deviation of the machine chuck is measured by applying the same reference device 60, such as Master Pallet. The first touch probe is applied, and the measurement is conducted based on the electrical detection method. To measure the planarity deviation, points on bottom surface 63 of the reference device are detected and their coordinates are determined and stored. The detection is conducted for example on the 4 corners of the bottom surface of the reference device. Each corner position is located for example about 25 mm away from the center of the reference device. According to the location of the corner, it is possible to determine the planarity deviation for a reference distance of 100 mm. Each corner of the bottom surface is detected 3 times according 3 different measurement settings.

Figure 17 shows one example of the measured data. During run 1, points on the bottom are detected with static clamping position of the reference device, namely, at the initial clamping position of the reference device. The first touch probe is placed in position XY before the detection in Z. Each corner of the bottom surface is detected. During the run 2, points on the bottom surface are detected by static position XY of the first touch probe but the reference device is rotated and clamped in 4 different positions for example with a rotation angle of 0 degree, 90 degree, 180 degree and 270 degree, respectively. The data collected during the run 1 and run 2 allow to eliminate the deviation of the reference device itself to finally establish the planarity deviation of the chuck. planarity deviation PLD_X, PLD_Y in X and Y direction provides the delta altitude (positive or negative) for a reference distance of e.g., 100mm positive along X or Y. In addition, the run 3 ensures the robustness of the measurement by comparing the measurement data of run 1 and run 3.

Figures 11 and 12 illustrate the clamping positions of the reference device during the concentricity measurement and as well during the planarity measurement. As shown in the figure 11, the reference measurement device is first clamped in the first clamping position. The machine head is moved to the first touch probe to contact the positions in the reference hole and/or on the bottom surface of the reference measurement device. As shown in the figure 12, the reference measurement device is then clamped in the second clamping position, which is for example rotated for 180 degree from the first clamping position. Changing the clamping position of the reference device can be performed automatically or manually. When the reference measurement device is clamped in the second clamping position, the first touch probe is moved again to contact different positions in the reference hole and/or on the bottom surface of the reference device.

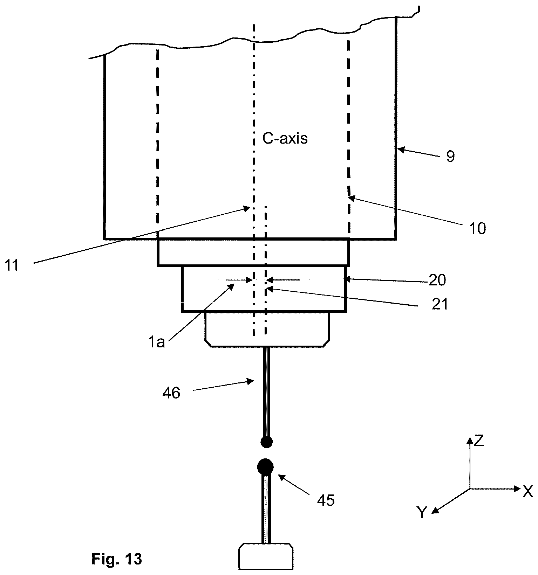

In order to detect the parallelism deviation, points located on two different altitudes, namely at two different Z positions, should be compared. Thus, a second touch probe is used as shown in the figure 13. Basically, the reference device mounted in the machine head is replaced by the second touch probe 46. The location of the first touch probe obtained by this measurement is finally compared with the location of the same touch probe detected by applying the reference device. This comparison allows the system to calculate the parallelism deviation.

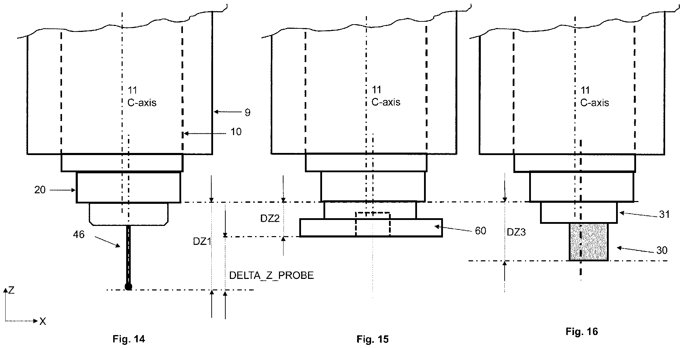

The bottom of the second touch probe 46 is a small reference ball, and the altitude of this reference ball is lower than the bottom surface of the reference device for the same chuck position. Using this probe, the delta altitude between the reference ball of the second touch probe and the bottom surface of the reference device is defined as distance DELTA_Z_PROBE, illustrated in fig 14. This distance is automatically detected during the measuring process. And based on this distance it is possible to determine the parallelism deviation for a reference delta altitude of 100 mm. In parallel, the center of the first touch probe 45 mounted on the machine table is detected by the second touch probe 46. The same electrical method is used. Only one measurement setting is sufficient as shown in the figure 17. During the run 9, the second touch probe 46 is oriented by C axis movement before center detection in X and Y direction. With the point defined by the measuring procedure run 9, it is possible to detect the parallelism deviation in between Z-axis and C-axis. The deviation is observed by comparison in between the center detected by run 8 with the center detected by run 9. And according to the altitude distance detected DELTA_Z_PROBE, the parallelism deviation PAD_X, PAD_Y in X and Y direction gives radial shift (positive or negative) of the chuck for a reference of 100 mm movement in Z positive direction.

Figures 14, 15 and 16 illustrate schematic views of different Z altitude of mounting different elements in the machine head. The C-axis device 10 is inserted in the machine head 9 and the chuck 20 is mounted on the C-axis device 10. The figure 14 illustrate the second touch probe 46 mounted in the chuck 20. In the figure 15, the reference device 62 is mounted in the chuck. In the figure 16, the tool electrode 30 applied for machining is clamped in the tool holder 31 which is mounted in the chuck. The distance between the bottom surface of the chuck and the reference ball of the second touch probe is indicated as DZ1 in the figure 14, this distance corresponds to the length of the second touch probe called PR_LENGHT. The distance between the bottom surface of the chuck and the bottom surface of the reference device is indicated as DZ2 in the figure 15. This corresponds to the size in Z for the reference device. The distance between the bottom surface of the chuck and the bottom of electrode is indicated as DZ3 in the figure 16, this distance corresponds to the average length of the electrodes called EL_LENGHT. The delta altitudes between DZ1 and DZ2, called DELTA_Z_PROBE, is identified and recorded during the measurement process. The distance DELTA_Z_PROBE and EL_LENGHT are necessary to convert the planarity and parallelism deviation measured into an additional concentricity deviation.

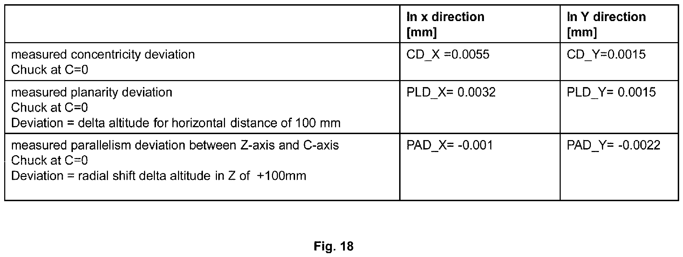

Figure 18 shows the concentricity deviation, the planarity deviation and the parallelism deviation determined based on the measurement data shown in the figure 17.

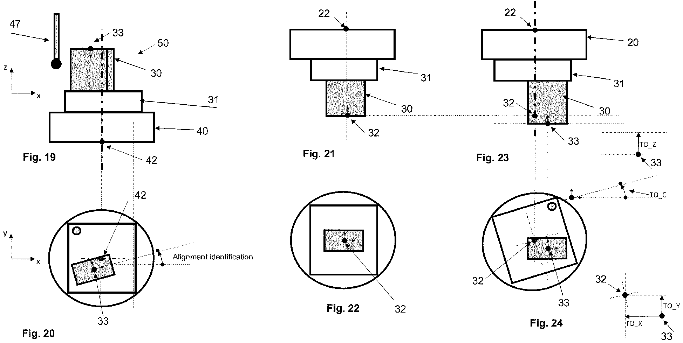

Each tool electrode has a zero-reference point defined in advance, e.g., during the design phase of the tool electrode. This zero-reference point of the electrode is defined, according to the design phase, by a certain distance and orientation to the zero-reference point of machine chuck. Figures 21 and 22 illustrate the location of the zero-reference point electrode 32 and the zero-reference point 22 on the machine chuck. After manufacturing the electrode, the real location of the zero-reference point electrode need to be measured to identify possible deviation in between the virtual design electrode shape and real electrode shape. Thus, the method comprises measuring the geometry of the tool electrode and determining the tool-electrode offset. In particular, the measurement is conducted outside of the machine tool, for instance on a coordinate measurement machine (CMM). Figures 19 and 20 show a schematic of the working area of the CMM 50. The CMM is equipped with a measurement chuck 40 which is similar to the machine chuck mounted in the EDM machine. The tool electrode 30 is mounted in the measurement chuck 40 through the tool electrode holder 31, in particular the same tool electrode holder which is to be clamped into the machine chuck 20 for machining. Before starting the tool-electrode offset measurement, a special measurement procedure must be performed to define the zero-reference point 42 of the measurement chuck on CMM. The zero-reference point 42 of the CMM chuck is determined by an alignment device. This zero-reference point 42 corresponds to the center of CMM chuck, similarly we can see in the figures 3, 4, 5, 21 and 23 the zero-reference point 22 of machine chuck corresponding to center of the machine chuck. If the electrode holder is clamped on CMM chuck or machine head chuck it is assumed that the reference point of the chuck has the same position relative to the reference point of the tool electrode. Based on the zero reference of the measurement chuck established, the dimension of the tool electrode is measured by a third touch probe 47. The alignment of the electrode along the axis X and the localization of the zero reference of the tool electrode 33 are identified. According to the predefined measuring program the measurement device measures a plurality of positions on the tool electrode. These positions are then used to calculate the tool electrode offsets in X, Y, Z and C represented by TO_X, TO_Y, TO_Z, and TO_C, in particular by applying a 3D Best-Fit algorithm.

The figures 23, and 24 illustrate the electrode placed into the chuck of the machine tool 20. The figures 23 illustrates the side view of the machine chuck, the tool holder and the tool electrode. The figures 24 illustrate the bottom view of the machine chuck, the tool holder and the tool electrode. The figures 21, 22 illustrate the electrode during the design phase, the reference point of the machine chuck 22 is supposed to correspond to the reference point of measurement chuck of the CMM 42, the dot 32 indicates the position of the zero-reference point according the design phase. The figures 23 and 24 illustrate the position of the electrode in the machine chuck, with the alignment of the electrode according to the offset C measured on CMM. It means that the C axis is rotated to make the lateral reference face of the tool electrode parallel to the X direction. The dot 22 indicates the zero reference of machine chuck, and the dot 33 indicates the real location of the zero-reference point by clamping the electrode on the machine chuck with proper C alignment. The distance in between the two zero reference points 32 and 33 illustrates the tool electrode offset values in X, Y and Z directions, TO_X, TO_Y, TO_Z. The rotation alignment in C illustrate the tool electrode offset values in C directions, TO_C.

In order to ensure accurately the positioning of the machine axis, the control unit needs to apply a compensation to incorporate the tool electrode offset and the machine deviations for each particular target position to reach. During the manufacturing preparation phase, the programmed machining path includes a plurality of machining positions, each position corresponds to one target position. During the machining phase, each target position given by the design phase is corrected to get a so-called real target position. This defines the coordinates at which the machine axes should be positioned for machining to obtain a designed cavity shape by considering the machine deviations and the tool electrode offset.

In order to obtain the real target positions different steps need to be performed. For each particular electrode, a global concentricity deviation (GCD_X GCD_Y) is determined. The measured planarity deviation and the measured parallelism deviation are converted into additional corresponding concentricity deviation defined as converted concentricity deviation (Con_CD_X, Con_CD_Y). These values are then accumulated with the measured concentricity deviation to obtain the global concentricity deviation. For this calculation, an average electrode length (EL_LENGHT) and the length of the touch probe (PR_LENGTH) must be provided.

The converted concentricity deviation (Con_CD_X and Con_CD_Y) are calculated as follows:

$$Con\_CD\_X = PLD\_X/100 * EL\_LENGHT + PAD\_X/100 * (EL\_LENGTH - PR\_LENGHT)$$

$$Con\_CD\_Y = PLD\_Y/100 * EL\_LENGHT + PAD\_Y/100 * (EL\_LENGTH - PR\_LENGHT)$$

The global concentricity deviation is calculated as follows:

$$GCD\_X = CD\_X + Con\_CD\_X$$

$$GCD\_Y = CD\_Y + Con\_CD\_Y$$

The next step is to adapt the global concentricity deviation according to the C-axis position corresponding to the tool electrode offset in C direction. During the measurement phase, the concentricity deviation measurement, the planarity deviation measurement and the parallelism deviation measurement are conducted at an initial machining position, at which the C-axis is at 0 degree. This need to be adapted according to the measured electrode offset value in C direction, TO_C.

The adapted concentricity deviation ACD_X and ACD_Y are calculated as follows:

$$ACD\_X = GCD\_X * \cos(TO\_C) - GCD\_Y * \sin(TO\_C)$$

$$ACD\_Y = GCD\_X * \sin(TO\_C) + GCD\_Y * \cos(TO\_C)$$

Finally, the adapted concentricity deviation (ACD_X, ACD_Y_Y) is combined with the measured tool electrode offset. The combination delivers the adapted tool electrode offset (ATO_X, ATO_Y, ATO_Z, ATO_C).

The adapted tool electrode offset is calculated as follows:

$$ATO\_X = TO\_X + (-1 * ACD\_X)$$

$$ATO\_Y = TO\_Y + (-1 * ACD\_Y)$$

$$ATO\_Z = TO\_Z$$

$$ATO\_C = TO\_C$$

When the control unit reads a target position, the adapted tool electrode offset is adjusted according to the target position direction of the C axis TP_C. This computation delivers the position correction amount (TEPCA_X, TEPCA_Y, TEPCA_Z, TEPCA_C), and finally this correction is applied to define the real target position (CTP_X, CTP_Y, CTP_Z, CTP_C).

One variant of the position correction amount computation is to apply a rotation matrix T, which is used to compute the displacement (translation and/or rotation) of an arbitrary position defined by the Cartesian coordinates x, y and z in a position vector to another position vector. A three-dimensional rotation matrix is defined as

$$T = Trans(X, dx) * Trans(Y, dy) * Trans(Z, dz) * Rot(Z, \theta)$$

$$T = \begin{bmatrix} \cos\theta & -\sin\theta & 0 & dx \\ \sin\theta & \cos\theta & 0 & dy \\ 0 & 0 & 1 & dz \\ 0 & 0 & 0 & 1 \end{bmatrix}$$

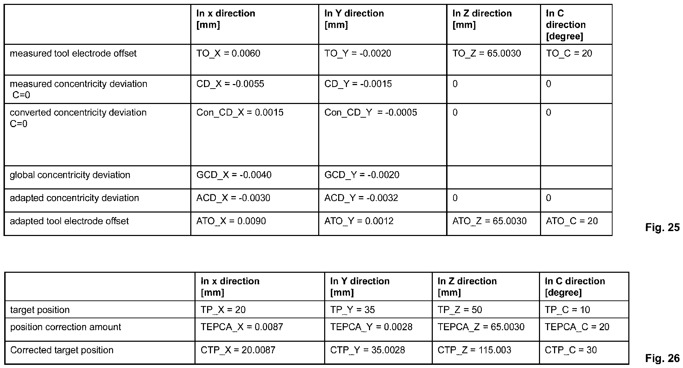

Figures 25 and 26 show a numerical example of determining the position correction amount and the target position. One row includes the measured tool electrode offset values in four axes, X, Y, Z and C, namely TO_X, TO_Y, TO_Z and TO_C. Another row includes the measured concentricity deviation values CD_X and CD_Y. The next rows show the conversion of planarity and parallelism deviations into additional concentricity deviation and finally the global concentricity deviation. Then, the subsequent row includes the adapted concentricity deviation, which is calculated based on the global concentricity deviation and tool offset C. The global concentricity deviation defines the concentricity deviation under the condition that rotation angle of C-axis is zero, but to make possible the combination in between global concentricity and tool offset, the global concentricity is adapted to the tool offset C value, TO_C. In the example shown in figure 25, the TO_C is 20 degree, therefore, the adapted concentricity deviation with respect to the C-axis having a rotation angle of 20 degree has the values of -0.0030 mm and -0.0032 mm in X and Y directions, respectively using the following formula based on the two-dimensional rotation matrix:

$$ACD\_X = GCD\_X * \cos(TO\_C) - GCD\_Y * \sin(TO\_C)$$

$$ACD\_Y = GCD\_X * \sin(TO\_C) + GCD\_Y * \cos(TO\_C)$$

The last row includes the adapted tool electrode offset which is the sum of the adapted concentricity deviation and the measured tool electrode offset.

Then, the machine target position needs to be adjusted. Figure 26 shows a numeric example of calculating the real position to compensate the global concentricity deviation and the tool electrode offset. When a given position is acquired by the control unit defined as a target position e.g TP_X, TP_Y, TP_Z and TP_C, a position correction amount is determined by the control unit. The position correction amount corresponds to the correction to apply to the target position. For Z and C direction, the correction to apply on the target position is directly given by the measured tool electrode offset. But the position correction amount in X and Y directions must be computed because the adapted tool electrode offset is valid only for a target position rotation TP_C=0. The correction to apply in X and Y is computed by the transformation of the adapted tool electrode offset with a rotation equivalent to the target position in C, TP_C. For example, the target rotation angle is 10 degree, TP_C=10. The position correction amount, for X and Y directions, is then calculated by the rotation of adapted tool electrode offset according to the target position in C axis.

$$TEPCA\_X = ATO\_X * \cos(TP\_C) - ATO\_Y * \sin(TP\_C)$$

$$TEPCA\_Y = ATO\_X * \sin(TP\_C) + ATO\_Y * \cos(TP\_C).$$

The real position is the sum of the target position and the tool electrode correction amount. In the example shown, the target position is defined as X=20, Y=35, Z=-50, and C=10, but the control unit is configured to first calculate the real position as explained above and use the real position to control the movement of the tool electrode. Therefore, the X axis will be moved to X=20.0087 mm, Y axis will be moved to Y= 35.0028 mm, Z axis will be moved to Z=115.003 mm and the electrode will be rotated to 30 degree.

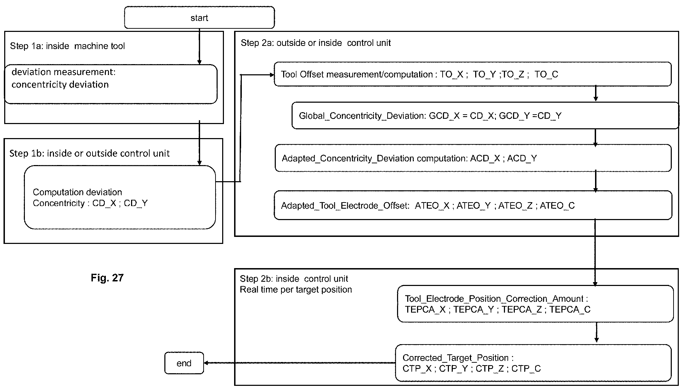

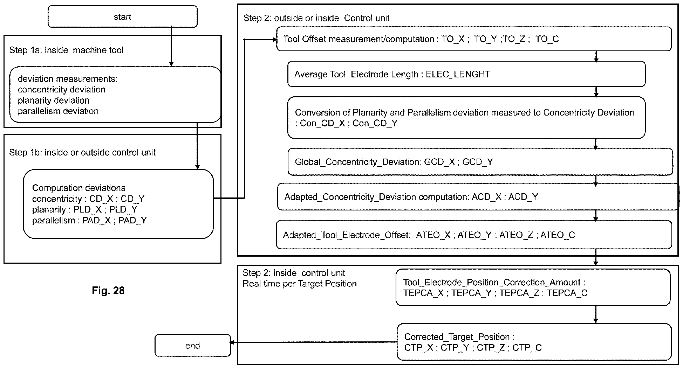

Figures 27 and 28 show the main steps of the method according to the present invention. Figure 27 shows the variant in which only concentricity deviation is measured and considered. Figure 28 shows the variant in which besides the concentricity deviation the parallelism deviation and the planarity deviation are also considered.

## REFERENCES ON FIGURES

| | |
|---|---|
| 1 | concentricity deviation |
| 1a | concentricity deviation value in X direction, CE_X |
| 1b | concentricity deviation value in Y direction, CE_Y |
| 2a | planarity deviation value in X direction, PLD_X |
| 3a | parallelism deviation value in X direction, PAD_X |
| 9 | machine head |
| 10 | C-axis device |
| 11 | C axis |
| 12 | point of C axis intersecting reference chuck plan |
| 20 | machine chuck |
| 21 | central axis of the machine chuck |
| 22 | zero reference point of machine chuck |
| 30 | tool electrode |
| 31 | tool electrode holder |
| 32 | zero reference point of the tool electrode on virtual electrode (CAD) |
| 33 | zero reference point of the tool electrode on real electrode |
| 40 | measurement chuck |
| 42 | zero reference point of measurement chuck |
| 45 | first touch probe |
| 46 | second touch probe |

47     third touch probe
50     CMM machine
60     reference device
61     clamping portion
62     measurement portion
63     bottom surface of the reference device
64     rotation alignment face of the reference device
65     reference hole of the reference device
70     machine work tank
71     machine table
71b    machine table static
72     cross-slide, X-axis
73     machine base
80     workpiece
100    die-sinking EDM machine (machine table moving along X and Y)
100b   die-sinking EDM machine (machine head moving along X and Y)

**Claims**

1. A method for compensating positioning errors of a die-sinking electro-discharge machine tool (100, 100b), wherein the machine tool comprises a worktable (71, 71b) and a machine head (9) with a rotational axis device (10), wherein a machine chuck (20) is detachably mounted at the rotational axis device, wherein a tool electrode (30) can be mounted on the machine chuck and a workpiece (80) can be mounted on the machine table, wherein the machine tool comprises three linear axes (X, Y and Z) and a rotation axis (C), by which the tool electrode and the workpiece can be moved relative to each other, wherein the machine tool comprises a control unit configured to control the position of the linear axes, the method comprising:

    a. mounting a first touch probe (45) on the worktable;
    b. mounting a reference device (60) on the machine chuck, wherein the reference device has a clamping portion (61) for clamping the reference device into the machine chuck and a measurement portion (62), wherein the measurement portion has a plate-like shape with a top surface and a bottom surface, wherein the clamping portion is formed on the top surface and a reference hole (65) is formed on the bottom surface, wherein the reference hole is arranged in a manner that the central axis of the reference hole is aligned with the central axis of the machine chuck when the reference device is clamped in the machine chuck;
    c. contacting the inner surface of the reference hole at a plurality of positions by the first touch probe, in particular at least four positions in the reference hole;
    d. determining the center position of the reference hole based on the measured positions;
    e. calculating a concentricity deviation (CD_X, CD_Y) by comparing the determined center position of the reference hole with the position of the rotational axis (C-axis), wherein the concentricity deviation defines the radial distance between the rotational axis of the machine head (9) and the central axis of the machine chuck (21);
    f. measuring a tool electrode offset by a coordinate measurement device;
    g. calculating a tool-electrode correction amount for a target position of the machine axes (X, Y, Z, C) on the basis of the calculated concentricity deviation and the tool-electrode offset;
    h. adapting the target position of the machine axes to a real position by adding the calculated tool-electrode correction amount; and
    i. applying the real position for controlling the machine axes by the control unit of the machine tool.

2. The method according to claim 1, wherein the method comprises:

    a. contacting a plurality of positions on the bottom surface (63) of the reference device by the first touch probe, in particular four positions at four different corners of the bottom surface;
    b. determining the plurality of positions on the bottom surface; and
    c. determining a planarity deviation (PLD_X, PLD_Y) based on the measured positions on the bottom surface of the reference device, wherein the planarity deviation defines horizontal inclination of the machine chuck.

3. The method according to claim 1 or 2, wherein the method further comprises:

    a. replacing the reference device by a second touch probe (46) having a reference ball on the top of the second touch probe;

b. contacting the reference ball of the second touch probe by the first touch probe; and

c. determining the position of the reference ball based on the measured positions on the reference ball;

d. comparing the position of the reference ball with the position of the hole on bottom surface of the reference device, wherein the hole position on the bottom surface is determined based on the measured plurality of positions on the bottom surface and on the inner surface of the hole; and

e. determining a parallelism deviation (PaD_X, PaD_Y) based on the comparison of the position of the reference ball with the position of the hole on the bottom surface of the reference device, wherein the parallelism deviation defines the vertical inclination of the C axis.

4. The method according to claim 3, wherein a global concentricity deviation (GCD_X, GCD_Y) is calculated by combining the concentricity deviation, the planarity deviation and the parallelism deviation.

5. The method according to claim 4, wherein an adapted concentricity deviation (ACD_X, ACD_Y) is calculated by adjusting the global concentricity deviation according to the measured tool electrode offset in C (TO_C).

6. The method according to one of claims 1 to 5, wherein the method further comprises:

a. contacting the inner surface of the reference hole at a plurality of positions by a first touch probe, wherein the C axis stays at an initial position having a rotation angle of zero degree;

b. rotating the C axis to a second position, in particular with a rotation angle of 180 degree;

c. contacting the inner surface of the reference hole at a plurality of positions by a first touch probe when the C axis stays at the second position; and

d. determining the center position of the reference hole based on the measured positions.

7. The method according to one of previous claims, wherein the method further comprises selecting one or more of the following positioning errors to be compensated: the concentricity deviation, the planarity deviation and the parallelism deviation.

8. The method according to one of previous claims, wherein the method is carried out in accordance with the following sequence for each target position:

a. reading the target position by the control unit;

b. determining the calculated position correction amount by the control unit;

c. determining the real position by the control unit; and

d. controlling the axes to move the tool electrodes according to determined real position by the control unit.

Fig. 1

Fig. 2

Z

C-axis

Z

X

9

10

11

12

20

21

22

1a

**Fig. 3**

9

10

20

12

22

Y

X

**Fig. 4**

12

1

1b

22

1a

**Fig. 5**

Fig. 6

Fig. 7

C-axis

9

10

11

1a
61
62

20
21

60

Z
X

45

**Fig. 8**

61
62
60

63

65

**Fig. 9**

Z
X

64

60

65

**Fig. 10**

X
Y

Fig. 11

X

Y

Fig. 12

X

Y

C-axis

9

10

11

20

21

1a

46

45

Z

X

Y

**Fig. 13**

11
C-axis

9

10

20

46

DZ1

DELTA_Z_PROBE

Z

X

**Fig. 14**

11
C-axis

DZ2

60

**Fig. 15**

11
C-axis

DZ3

31

30

**Fig. 16**

| measurement goal | | | Z P1 | Z P2 | Z P3 | Z P4 |
|---|---|---|---|---|---|---|
| altitude Z of bottom surface of reference device | run 1: | Z detection after XY movement on the bottom surface | 0.0004 | 0.0028 | 0.0013 | -0.0003 |
| | run 2: | Z detection after clamping rotation | 0.0001 | 0.0009 | 0.0011 | 0.0011 |
| | run 3: | confirmation run 1 | 0.0006 | 0.0028 | 0.0017 | -0.0001 |
| | | | CE_X | CE_Y | | |
| center position of reference hole | run 4 | X or Y detection after C axis rotation | 0.0000 | 0.0000 | | |
| | run 5 | X or Y detection with C axis static = 0 | -0.0006 | 0.0008 | | |
| | run 6 | X or Y detection with C axis static = 180 | -0.0005 | 0.0001 | | |
| | run 7 | X or Y detection with C axis rotation & Master pallet clamped at 180 deg | -0.0001 | 0.0001 | | |
| | run 8 | confirmation run 4 | 0.0003 | 0.0003 | | |
| center position of second touch probe | run 9 | X or Y detection after C axis rotation | 0.0001 | -0.0006 | | |

Fig. 17

|  | In x direction [mm] | In Y direction [mm] |
|---|---|---|
| measured concentricity deviation<br>Chuck at C=0 | CD_X =0.0055 | CD_Y=0.0015 |
| measured planarity deviation<br>Chuck at C=0<br>Deviation = delta altitude for horizontal distance of 100 mm | PLD_X= 0.0032 | PLD_Y= 0.0015 |
| measured parallelism deviation between Z-axis and C-axis<br>Chuck at C=0<br>Deviation = radial shift delta altitude in Z of +100mm | PAD_X= -0.001 | PAD_Y= -0.0022 |

Fig. 18

47

33

50

30

z

x

31

40

42

Fig. 19

42

y

x

Alignment identification

33

Fig. 20

22

31

30

32

Fig. 21

32

Fig. 22    32

22

20

31

32

30

33

Fig. 23

TO_Z

33

TO_C

32

33

32

TO_Y

TO_X

33

Fig. 24

| | In x direction [mm] | In Y direction [mm] | In Z direction [mm] | In C direction [degree] |
|---|---|---|---|---|
| measured tool electrode offset | TO_X = 0.0060 | TO_Y = -0.0020 | TO_Z = 65.0030 | TO_C = 20 |
| measured concentricity deviation C=0 | CD_X = -0.0055 | CD_Y = -0.0015 | 0 | 0 |
| converted concentricity deviation C=0 | Con_CD_X = 0.0015 | Con_CD_Y = -0.0005 | 0 | 0 |
| global concentricity deviation | GCD_X = -0.0040 | GCD_Y = -0.0020 | | |
| adapted concentricity deviation | ACD_X = -0.0030 | ACD_Y = -0.0032 | 0 | 0 |
| adapted tool electrode offset | ATO_X = 0.0090 | ATO_Y = 0.0012 | ATO_Z = 65.0030 | ATO_C = 20 |

Fig. 25

| | In x direction [mm] | In Y direction [mm] | In Z direction [mm] | In C direction [degree] |
|---|---|---|---|---|
| target position | TP_X = 20 | TP_Y = 35 | TP_Z = 50 | TP_C = 10 |
| position correction amount | TEPCA_X = 0.0087 | TEPCA_Y = 0.0028 | TEPCA_Z = 65.0030 | TEPCA_C = 20 |
| Corrected target position | CTP_X = 20.0087 | CTP_Y = 35.0028 | CTP_Z = 115.003 | CTP_C = 30 |

Fig. 26

start

Step 1a: inside machine tool

deviation measurement:
concentricity deviation

Step 1b: inside or outside control unit

Computation deviation
Concentricity : CD_X ; CD_Y

Step 2a: outside or inside control unit

Tool Offset measurement/computation : TO_X ; TO_Y ;TO_Z ; TO_C

Global_Concentricity_Deviation: GCD_X = CD_X; GCD_Y =CD_Y

Adapted_Concentricity_Deviation computation: ACD_X ; ACD_Y

Adapted_Tool_Electrode_Offset: ATEO_X ; ATEO_Y ; ATEO_Z ; ATEO_C

**Fig. 27**

Step 2b: inside control unit
Real time per target position

Tool_Electrode_Position_Correction_Amount :
TEPCA_X ; TEPCA_Y ; TEPCA_Z ; TEPCA_C

Corrected_Target_Position :
CTP_X ; CTP_Y ; CTP_Z ; CTP_C

end

start

Step 1a: inside machine tool

deviation measurements:
concentricity deviation
planarity deviation
parallelism deviation

Step 1b: inside or outside control unit

Computation deviations
concentricity : CD_X ; CD_Y
planarity : PLD_X ; PLD_Y
parallelism : PAD_X ; PAD_Y

**Fig. 28**

Step 2: outside or inside  Control unit

Tool Offset measurement/computation : TO_X ;  TO_Y ;TO_Z ;  TO_C

Average Tool  Electrode Length : ELEC_LENGHT

Conversion of Planarity and Parallelism deviation measured to Concentricity Deviation
: Con_CD_X ; Con_CD_Y

Global_Concentricity_Deviation: GCD_X ; GCD_Y

Adapted_Concentricity_Deviation computation: ACD_X ; ACD_Y

Adapted_Tool_Electrode_Offset:  ATEO_X ; ATEO_Y ; ATEO_Z ; ATEO_C

Step 2: inside  control unit
Real time per Target Position

Tool_Electrode_Position_Correction_Amount :
TEPCA_X ; TEPCA_Y ; TEPCA_Z ; TEPCA_C

Corrected_Target_Position :
CTP_X ; CTP_Y ; CTP_Z ; CTP_C

end

Europäisches Patentamt
European Patent Office
Office européen des brevets

# EUROPEAN SEARCH REPORT

**Application Number**

EP 24 16 1928

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JP S61 297064 A (MITSUBISHI ELECTRIC CORP) 27 December 1986 (1986-12-27) * columns 5,6,7; figures 1-4 * | 1-8 | INV. G05B19/404 |
| Y | US 4 583 159 A (KANEMOTO MASAKAZU [JP] ET AL) 15 April 1986 (1986-04-15) * column 2, line 7 - line 41 * * column 4, line 56 - column 6, line 5; figure 3 * | 1-8 | |
| Y,D | US 5 248 867 A (OHBA NOBUAKI [JP] ET AL) 28 September 1993 (1993-09-28) * column 1, line 1 - column 3, line 16 * | 1-8 | |
| Y | US 6 819 974 B1 (COLEMAN RICHARD M [US] ET AL) 16 November 2004 (2004-11-16) * column 12, line 48 - column 14, line 56 * | 6 | |
| A | | 1-5,7,8 | |

TECHNICAL FIELDS
SEARCHED (IPC)

G05B

The present search report has been drawn up for all claims

| Place of search | Date of completion of the search | Examiner |
|---|---|---|
| Munich | 25 June 2024 | Frey, Richard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 1928

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2024

| Patent document cited in search report | | Publication date | Patent family member(s) | | Publication date |
|---|---|---|---|---|---|
| JP S61297064 | A | 27-12-1986 | NONE | | |
| US 4583159 | A | 15-04-1986 | EP | 0098044 A2 | 11-01-1984 |
| | | | JP | H0238342 B2 | 30-08-1990 |
| | | | JP | S58206364 A | 01-12-1983 |
| | | | US | 4583159 A | 15-04-1986 |
| US 5248867 | A | 28-09-1993 | DE | 4139202 A1 | 04-06-1992 |
| | | | JP | H04201124 A | 22-07-1992 |
| | | | KR | 920010386 A | 26-06-1992 |
| | | | US | 5248867 A | 28-09-1993 |
| US 6819974 | B1 | 16-11-2004 | EP | 1139189 A2 | 04-10-2001 |
| | | | ES | 2427794 T3 | 04-11-2013 |
| | | | US | 6819974 B1 | 16-11-2004 |
| | | | US | 2005043849 A1 | 24-02-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5248867 A